# EUROPÄISCHE PATENTSCHRIFT

(11) **EP 4 093 649 B1**
(45) Veröffentlichungstag und Bekanntmachung des Hinweises auf die Patenterteilung: **24.07.2024**
(21) Anmeldenummer: 20796554.2
(22) Anmeldetag: 21.10.2020
(51) Int. Cl.: B62B 5/06, F16B 7/04, F16B 21/07, F16B 2/22

(54) **KLEMMELEMENT UND TRANSPORTWAGEN**
CLAMPING ELEMENT AND TROLLEY
ELÉMENT DE BLOCAGE ET CHARIOT DE TRANSPORT

(30) Priorität: 22.01.2020 DE 202020100311 U
(43) Veröffentlichungstag der Anmeldung: 30.11.2022
(73) Patentinhaber: Wanzl GmbH & Co. KGaA, 89340 Leipheim (DE)
(72) Erfinder: DAMINGER, Johann, 89233 Neu-Ulm (DE); RUF, Paul, 87745 Eppishausen (DE); STÖCKLE, Dieter, 89361 Landensberg (DE)
(86) Internationale Anmeldenummer: PCT/EP2020/079625
(87) Internationale Veröffentlichungsnummer: WO 2021/148157

(56) Entgegenhaltungen:
- DE-A1- 102017 221 802
- DE-A1- 19 830 297
- US-A- 5 127 762
- US-A1- 2018 015 606

## Beschreibung

Die vorliegende Erfindung betrifft ein Befestigungssystem zur Befestigung eines Schiebegriffes sowie einen entsprechenden Transportwagen, insbesondere einen Einkaufswagen.

Aus dem Stand der Technik sind bereits Transportwagen, insbesondere stapelbare Einkaufswagen bekannt. Diese weisen Schiebegriffe auf, mittels derer die Transportwagen entsprechend geschoben und gesteuert werden können. In der Regel handelt es sich bei den Transportwagen um Transportwagen mit Drahtkörben, jedoch sind mittlerweile auch Kunststoffkörbe oder Composite-Werkstoffe entsprechend verbreitet. Meist ist zur Befestigung eines Schiebegriffes ein Bügelabschnitt am Transportwagenkorpus bzw. dem Transportwagenkorb vorgesehen. Dabei ist weiter zu beachten, dass die Schiebegriffbügel bzw. Schiebegriffe vergleichsweise standardisiert sind bzw. der Wunsch besteht, hier Standardelemente anbieten zu können. Somit muss eine Lösung dafür gefunden werden, dass die Schiebegriffe entsprechend trotz unterschiedlichster Transportwagenmodelle auch in einem breiten Toleranzfeld bzw. bei unterschiedlichen Transportwagendesigns leicht montiert werden können. Bislang wird dies manuell durch entsprechende Anpassungen, wie Aufbiegen oder dergleichen, erreicht. Durch das Aufbiegen, beispielsweise eines metallischen Griffbügels, wird erreicht, dass ein Klemmsitz zwischen Griffkappe und Griffbügel entstehen kann. Denkbar ist weiter, dass entsprechende Klemmsitze mittels einer Schraubverbindung oder einer Drahtstütze erreicht werden können.

Einkaufswagen mit Schiebegriffen sind zum Beispiel aus der DE 198 30 297 A1, der DE 103 42 438 A1, der EP 1485888 A2, der EP 3416868 A1 oder der DE 198 11 774 A1 bekannt. Derartige Befestigungen sind beispielsweise aus der EP 0591006 A1, der DE 3714115 A1 oder auch der DE 9106701U1 bekannt.

Es ist daher die Aufgabe der vorliegenden Erfindung, ein Befestigungssystem mit einem Klemmelement zur Befestigung eines Schiebegriffs eines Transportwagens der eingangs genannten Art in vorteilhafter Weise weiterzubilden, insbesondere dahingehend, dass eine Montage eines Schiebegriffs an einem Transportwagen einfacher und gleichzeitig in einem großen Einsatzbereich bzw. breiten Toleranzfeld ermöglicht wird und dies nach Möglichkeit auch werkzeuglos geschehen kann.

Diese Aufgabe wird erfindungsgemäß gelöst durch ein Befestigungssystem mit den Merkmalen des Anspruchs 1. Danach ist vorgesehen, dass ein Klemmelement zur Befestigung eines Schiebegriffes eines Transportwagens, insbesondere eines Einkaufswagens bereitgestellt wird, wobei das Klemmelement wenigstens einen Klemmabschnitt zur klemmenden Befestigung mit einem Transportwagenkorpus aufweist, sowie weiter wenigstens ein Verrastungselement zur verrastenden Befestigung des Schiebegriffes.

Bei dem Transportwagenkorpus kann es sich insbesondere um einen Transportwagenkorb handeln. Bei dem Transportwagen kann es sich insbesondere um einen Einkaufswagen, insbesondere um einen stapelbaren Einkaufswagen handeln. Denkbar ist insbesondere, dass der Transportwagenkorpus ein Drahtgitterkorb ist. An dem Drahtgitterkorb kann ein Griffbügel angeformt sein, der sich im Wesentlichen durch einen C- oder U-förmigen Abschnitt ausbildet.

Die Erfindung basiert auf dem Grundgedanken, dass durch den Einsatz eines Klemmelementes, auch beispielsweise Drahtstütze genannt, eine schnellere und einfachere Montage erreicht wird. Insbesondere soll durch das Klemmelement eine klemmende und zugleich sichere verrastende Verbindung zwischen Schiebegriff und Transportwagenkorpus erreicht werden.

Der Klemmabschnitt zur klemmenden Befestigung an dem Transportwagenkorpus kann insbesondere rampenartig ausgebildet sein. Denkbar ist dabei, dass die Rampe auch gleichzeitig an die Außenkontur des Transportwagenkorpus angepasst ist. Hier bietet es sich beispielsweise an, dass eine Abrundung mit dem Radius des Drahtes des Transportwagenkorpus erfolgt. In diesem Fall legt sich der Klemmabschnitt formangepasst an die Außenkontur des Transportwagenkorpus, insbesondere beispielsweise an den Griffbügel des Transportwagenkorpus, entsprechend an.

Außerdem kann vorgesehen sein, dass mehrere Klemmabschnitte vorgesehen sind, wobei wenigstens zwei Klemmabschnitte eine voneinander unterschiedliche Ausrichtung aufweisen. Hierdurch kann erreicht werden, dass die Klemmabschnitte von unterschiedlichen Seiten den Transportwagenkorpus berühren und hierdurch eine verbesserte Klemmung des Klemmelements insgesamt erreicht werden kann. Denkbar ist beispielsweise, dass das Klemmelement in den Griffbügel eingesetzt wird und die Klemmabschnitte sowohl von der einen als auch von der gegenüberliegenden Seite entsprechend eingreifen und hierdurch eine klemmende Führung des Klemmelements im Griffbügel erzielen.

Außerdem kann vorgesehen sein, dass das Klemmelement eine zumindest teilweise an den Transportwagenkorpus angepasste Außenkontur aufweist. In diesem Fall kann vorgesehen sein, dass das Klemmelement einen Korpus aufweist, der beispielsweise an die Innenkontur des Griffbügels angepasst ist, so dass das Klemmelement in den Griffbügel des Transportwagenkorpus selbst eingesetzt werden kann.

In diesem Fall ist insbesondere denkbar, dass das Klemmelement eine C-förmige Konturierung bzw. eine C-förmige Außenkontur aufweist, die an die Innenkontur des Transportwagenkorpus bzw. des Griffbügels des Transportwagenkorpus angepasst ist.

Außerdem kann vorgesehen sein, dass das Klemmelement ein Halteelement aufweist, das derart ausgebildet ist, dass es zumindest teilweise im montierten Zustand einen Abschnitt des Transportwagenkorpus klemmend umgreift. Denkbar ist insbesondere, dass das Halteelement im Bereich des gekrümmten Abschnittes des Griffbügels aufgeclipst werden kann und dort den Griffbügel bzw. den Abschnitt des Transportwagenkorpus klemmend umgreift. Eine weitere Möglichkeit dieser Ausgestaltung ist, dass an dieser Stelle in der Krümmung der Griffbügel klemmend umgriffen wird, während die geraden Abschnitte des Griffbügels bzw. des Transportwagenkorpus von den Klemmabschnitten entsprechend klemmend berührt werden. Dadurch ergibt sich die Möglichkeit, zunächst das Halteelement entsprechend aufzusetzen und dann das Klemmelement in den Griffbügel einzuschwenken bis die Klemmabschnitte entsprechend von unterschiedlichen Seiten die geraden Abschnitte des Griffbügels entsprechend klemmend berühren und hierdurch das Klemmelement insgesamt im Griffbügel bzw. im Transportwagenkorpus entsprechend klemmend eingesetzt ist.

Das Halteelement kann derart beschaffen sein, dass es die Montagekräfte beim Fügen bzw. Montieren der Griffkappe aufnimmt.

Außerdem kann vorgesehen sein, dass das Halteelement eine vergleichbare Klemmfunktion wie die Klemmabschnitte erfüllt. Denkbar ist aber auch, dass allein das Halteelement bereits eine so hohe Klemmkraft bereitstellt, dass das Klemmelement in Position gehalten werden kann und es auf weitere Elemente nicht ankommt bzw. diese dann redundant sind.

Des Weiteren kann vorgesehen sein, dass das Halteelement das Klemmteil am Griffbügel bzw. der Schiebegriffeinheit positioniert.

Außerdem kann vorgesehen sein, dass das Klemmelement wenigstens ein Federelement aufweist, das derart ausgebildet ist, dass es im montierten Zustand gegen einen Abschnitt des Transportwagenkorpus federnd drückt. Hierdurch können Toleranzen ausgeglichen und dafür gesorgt werden, dass das Klemmelement positionstreu im montierten Zustand im Transportwagenkorpus, insbesondere im Griffbügel entsprechend klemmend und positionstreu eingesetzt ist. Denkbar ist insbesondere, dass mehrere Federelemente, insbesondere zwei Federelemente vorgesehen sind. In diesem Fall bietet es sich an, dass die Federelemente an gegenüberliegenden Seiten des Klemmelementes angeordnet sind, so dass wenigstens ein Federelement gegen einen Abschnitt des Griffbügels und das andere Federelement gegen einen anderen Abschnitt des Griffbügels drückt, so dass sich das Klemmelement insgesamt in dem Griffbügel verspreizt. Dies gilt entsprechend auch für jegliche andere Ausgestaltung, bei der das Klemmelement in einem anderen geeigneten Abschnitt des Transportwagenkorpus eingesetzt wird.

Außerdem ist vorgesehen, dass das Klemmelement wenigstens ein Führungselement aufweist, das derart ausgebildet ist, dass es im montierten Zustand in ein Gegenführungselement am und/oder im Schiebegriff eingreift. Hierdurch wird bewirkt, dass der Schiebegriff im eingesetzten Zustand nicht nur im Klemmelement verrastet wird und hierdurch am Transportwagenkorpus befestigt wird. Durch das Führungselement wird zugleich erreicht, dass es einen positionstreuen Sitz des Schiebegriffes relativ zum Klemmelement und damit auch zum Transportwagenkorpus gibt, wodurch ein Wackeln des Schiebegriffs verhindert wird.

Mittels des Führungselements kann erreicht werden, dass es zu einer sogenannten Konturüberschneidung bzw. Konturpassung kommt. Es wird also ein formschlüssiger Anzug zwischen Klemmelement und dem Gegenstück, z.B. der (Schiebe-)Griffkappe bereitgestellt. Hierdurch kann ebenfalls eine Klemmwirkung (z.B. durch die Finger und deren Gegenstücke) erzeugt werden. Es hat sich in Versuchen gezeigt, dass hierdurch sehr wirkungsvoll ein Wackeln verhindert werden kann.

Außerdem kann vorgesehen sein, dass das Verrastungselement eine Rastnocke ist oder umfasst. Über die Ausbildung einer Rastnocke kann ein einfaches Verrastungselement bereitgestellt werden, mittels dessen der Schiebegriff am Klemmelement verrastend befestigt werden kann.

Die Rastnocke kann federnd auf einer Blattfeder bzw. auf einem Federelement angeformt sein. Durch die Federung können die Montagekräfte reduziert werden. Außerdem ermöglich die Federung eine mehrmalige zerstörungsfreie Montage bzw. Demontage.

Gemäß Anspruch 1 betrifft die vorliegende Erfindung ein Befestigungssystem zur Befestigung eines Schiebegriffes eines Transportwagens. Danach ist vorgesehen, dass das Befestigungssystem wenigstens ein Klemmelement, wie vorstehend beschrieben, aufweist. Das Befestigungssystem weist weiter neben dem Klemmelement einen Transportwagenkorpus mit einer Klemmelementaufnahme und mit wenigstens einem Schiebegriff auf. Die Klemmelementaufnahme kann beispielsweise ein sog. Griffbügel sein, d.h. ein C-förmig bzw. U-förmig ausgebildeter Abschnitt, in den das Klemmelement eingesetzt werden kann.

Außerdem betrifft die vorliegende Erfindung einen Transportwagen. Bei dem Transportwagen kann es sich insbesondere um einen Einkaufswagen handeln. Der Transportwagen weist wenigstens ein Befestigungssystem, wie vorstehend beschrieben, auf.

Weitere Einzelheiten und Vorteile der Erfindung sollen nun anhand eines in den Zeichnungen näher dargestellten Ausführungsbeispiels erläutert werden.

Es zeigen:
- Fig. 1: eine perspektivische Ansicht eines Ausführungsbeispiels eines erfindungsgemäßen Klemmelements;
- Fig. 2: eine weitere perspektivische Ansicht auf das Klemmelement eingesetzt in den Transportwagenkorpus eines erfindungsgemäßen Ausführungsbeispiels eines Transportwagens;
- Fig. 3: eine weitere perspektivische Ansicht auf das Klemmelement gemäß Fig. 1;
- Fig. 4: eine weitere perspektivische Ansicht auf die Anordnung gemäß Fig. 2;
- Fig. 5: eine Explosionsdarstellung im Zusammenhang mit der Montage der Anordnung gemäß Fig. 2 und Fig. 4 mit einem Schiebebügel;
- Fig. 6: eine weitere Ansicht auf den Montagevorgang gemäß Fig. 5;
- Fig. 7: eine Schnittdarstellung des Montagevorgangs;
- Fig. 8: eine weitere Schnittdarstellung des Montagevorgangs;
- Fig. 9: eine weitere Schnittdarstellung des Montagevorgangs;
- Fig. 10: eine weitere Schnittdarstellung des Montagevorgangs;
- Fig. 11: eine perspektivische Ansicht des gesamten Ausführungsbeispiels eines erfindungsgemäßen Befestigungssystems umfassend das Klemmelement gemäß Fig. 1, den Schiebegriff sowie den entsprechenden Transportwagen; und
- Fig. 12: eine weitere Ansicht auf die Anordnung gemäß Fig. 11.

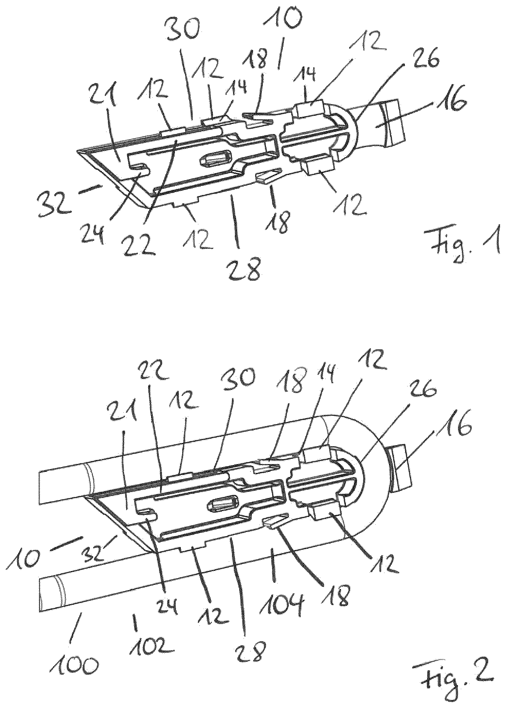

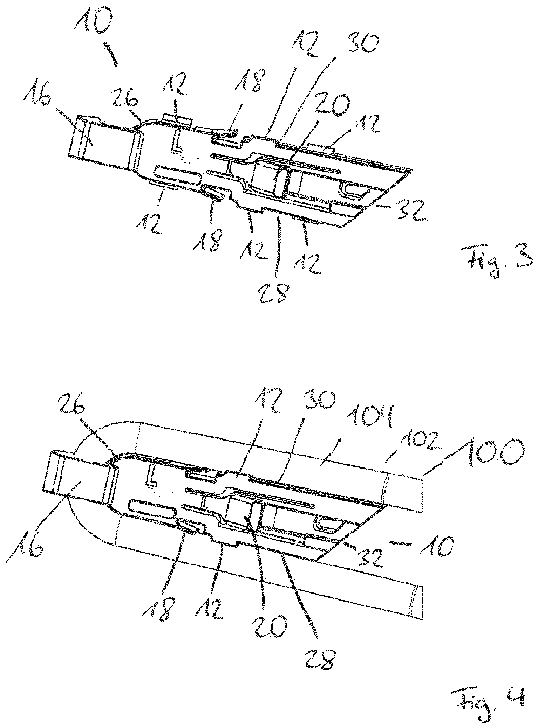

**Fig. 1** zeigt in perspektivischer Ansicht ein Ausführungsbeispiel eines erfindungsgemäßen Klemmelements 10. Das Klemmelement 10 dient zur Befestigung eines später noch beschriebenen Schiebegriffs 200 eines Transportwagens 100, hier eines Einkaufswagens. Das Klemmelement 10 weist insgesamt sechs Klemmabschnitte 12 auf, die jeweils gegenläufig angeordnet sind. Die Klemmabschnitte 12 weisen dabei gekrümmte Außenkonturen 14 auf und die Außenkonturen 14 sind dabei jeweils gegenläufig zueinander angeordnet. Die Klemmabschnitte 14 dienen zur klemmenden Befestigung mit einem Transportwagenkorpus 102 eines Transportwagens 100. Das Klemmelement 10 weist weiter ein Halteelement 16 auf. Darüber hinaus sind zwei Federelemente 18 an entgegengesetzten Seiten des Klemmelements 10 vorgesehen. Wie dies weiter aus Fig. 3 ersichtlich ist, ist ein Verrastungselement 20 in Form einer Rastnocke 20 vorgesehen.

Außerdem ist, wie in Fig. 1 gezeigt, auf der Außenfläche ein Führungselement 21 in Form einer speziell ausgeformten Führungsfeder 21 vorgesehen. Die Führungsfeder 21 weist dabei einen langen Führungsfederfinger 22 und einen kurzen Federführungsfinger 24 auf, die durch einen entsprechenden Verbindungsabschnitt miteinander verbunden sind. Dabei ist der lange Führungsfederfingerabschnitt 22 ca. fünf Mal so lang wie der kurze Führungsfederabschnitt 24. Die Führungsfederfinger 22 und 24 sind ferner entlang der Längsrichtung des Klemmelements 10 ausgerichtet und parallel zur Längskante. Die Längskante wird definiert durch gerade Außenabschnitte, wobei es einen kurzen geraden Außenabschnitt 28 und einen langen geraden Außenabschnitt 30 gibt. Der lange Führungsfederfinger 22 ist dabei bündig mit dem langen geraden Außenabschnitt 30 angeordnet. Der lange gerade Außenabschnitt 30 ist mit dem Außenabschnitt 28 über die Schrägkante 32 verbunden.

Bei dem Klemmelement 10 handelt es sich insbesondere um ein Kunststoffspritzgussteil. Denkbare Materialien, die für das Klemmelement 10 verwendet werden können, sind beispielsweise Polyamid (PA), Polyethylen (PE) oder Polypropylen (PP). Denkbar ist auch, Composite-Werkstoffe oder Verbundwerkstoffe einzusetzen. Es ist auch denkbar, in kleinen Serien das Klemmelement 10 durch "Additive Manufacturing" oder 3D-Druck herzustellen.

Im Bereich des Halteelements 16 weist das Klemmelement 10 auch einen gekrümmten Außenabschnitt 26 auf. Der gekrümmte Außenabschnitt 26 ist dabei C-förmig ausgebildet und an die Außenkontur des Bereichs des Transportwagens 100 angepasst, in den das Klemmelement 10 eingesetzt werden kann bzw. soll, wie dies in **Fig. 2** gezeigt ist. Wie dies sich aus **Fig. 2** ergibt, wird das Klemmelement 10 in einen Teil des Transportwagens 100, nämlich des Transportwagenkorpus 102, eingesetzt. Hierzu weist der Transportwagenkorpus 102 einen Griffbügel 104 auf. Die Außenkonturen des Klemmelements 10 mit dem gekrümmten Außenabschnitt 26, dem geraden kurzen Außenabschnitt 28 und dem geraden langen Außenabschnitt 30 sind dabei an die Form bzw. Innenkontur des Griffbügels 104 angepasst. Der Griffbügel 104 ist beispielsweise ein C-förmig bzw. U-förmig gebogenes Drahtgitterstück.

Grundsätzlich ist aber auch denkbar, dass es sich bei dem Griffbügel 104 um eine Struktur des Transportwagens 100 handelt, die aus einem entsprechend geeigneten Werkstoff hergestellt ist. Denkbar ist beispielsweise auch, bei Kunststoffeinkaufswagen oder Transportwagenkorpussen aus Kunststoff hier entsprechende Ausnehmungen vorzusehen.

Wie dies weiter ersichtlich ist aus **Fig. 2** und **Fig. 3****,** greifen die Klemmabschnitte 12 mit ihren gekrümmten Außenkonturen 14 an jeweils entgegengesetzten Seiten des Griffbügels 104 an. Dabei sind die zwei außenliegenden Klemmabschnitte 12 am geraden kurzen Außenabschnitt 28 bzw. am geraden langen Außenabschnitt 30 an einer ersten Seite (in **Fig. 2** ersichtlich) entsprechend anliegend, wohingegen der mittlere Klemmabschnitt auf der anderen Seite angreift (vgl. auch **Fig. 4****).** Das Halteelement 16 umgreift den gebogenen Abschnitt des Griffbügels 104 und wird in diesen entsprechend eingeclipst. Das Einsetzen des Klemmabschnittes 10 in den Griffbügel 104 erfolgt dabei beispielsweise derart, dass zunächst das Halteelement 16 entsprechend im gekrümmten Abschnitt des Griffbügels 104 eingesetzt wird und dann das gesamte Klemmelement 10 in das Innere des Griffbügels 104 entsprechend eingeschwenkt wird. Diese Montage erfolgt komplett werkzeuglos und durch das Halteelement 16 und die sechs Klemmabschnitte 12 wird eine sichere und werkzeuglose Montage bei gleichzeitig positionstreuer Befestigung im Griffbügel ermöglicht. Durch die Federelemente 18 wird weiter das Klemmelement 10 im Griffbügel 104 entsprechend verspreizt, wodurch Fertigungstoleranzen ausgeglichen werden können und das Klemmelement 10 sicher und fest ohne ein Wackeln oder dergleichen im Griffbügel 104 gehalten werden kann.

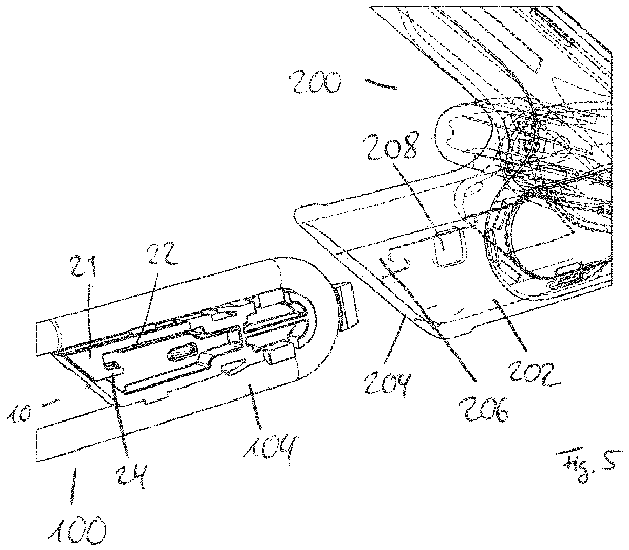

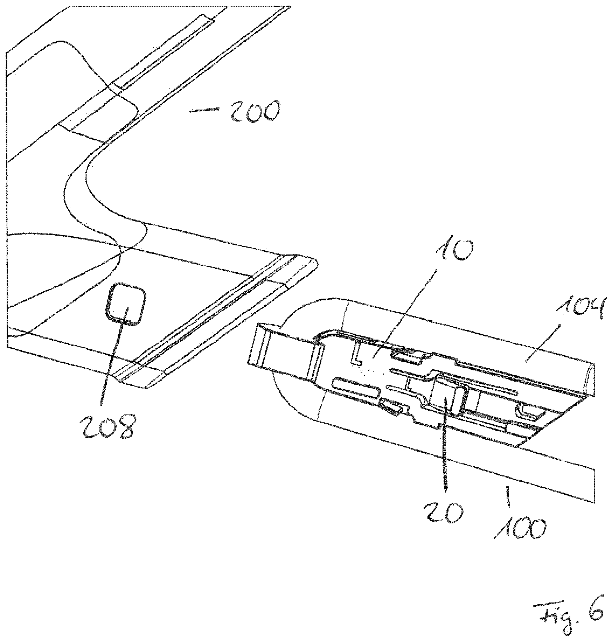

Wie dies weiter aus **Fig. 5** ersichtlich ist, kann dann die Anordnung bestehend aus Klemmelement 10 und dem Transportwagen 100 mit dem im Griffbügel 104 montierten Klemmelement entsprechend mit einem Schiebegriff 200, in **Fig. 5** durch die Schiebegriffkappe 202 repräsentiert, zusammengeführt werden. Die Schiebegriffkappe 202 weist dabei eine Schiebegriffkappenausnehmung 204 auf. In der Schiebegriffkappenausnehmung 204 ist ein Gegenführungselement in Form einer Führungsnut 206 vorgesehen, wobei die Führungsnut 206 an die Außenkontur des Führungselements bzw. der Führungsfeder 21 angepasst ist. Wie dies aus **Fig. 6** ersichtlich ist, ist auf der entgegengesetzten Seite der Schiebegriffkappe 202 eine Rastausnehmung 208 vorgesehen, in die die Rastnocke 20 eingreift.

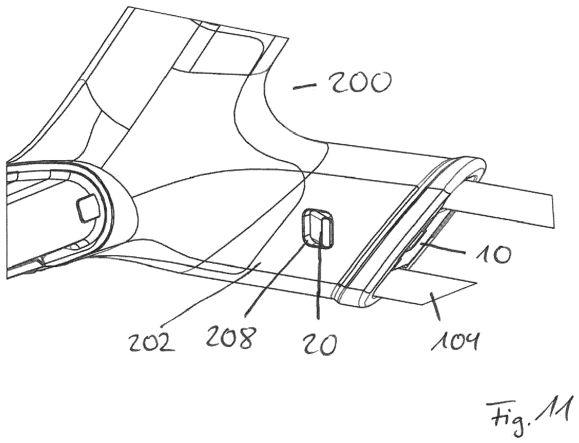

Dieser Zustand, in dem die Rastnocke 20 in die Rastausnehmung 208 eingreift, ist beispielsweise in **Fig. 11** gezeigt.

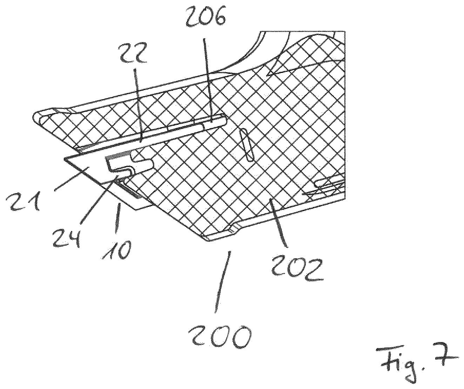

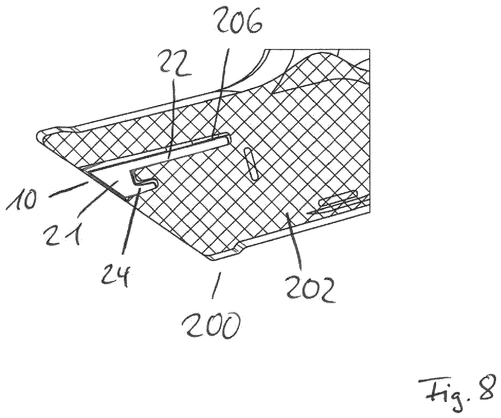

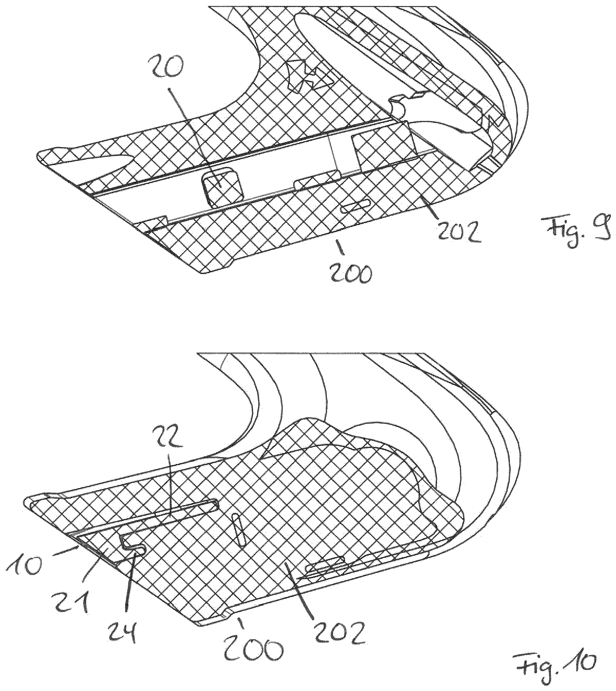

Die **Fig. 7-10** zeigen, wie die Führungsfeder 21 in die Führungsnut 206 eingeführt wird bzw. dort eingreift und die Rastnocke 20 in die Rastausnehmung 208 eingreift.

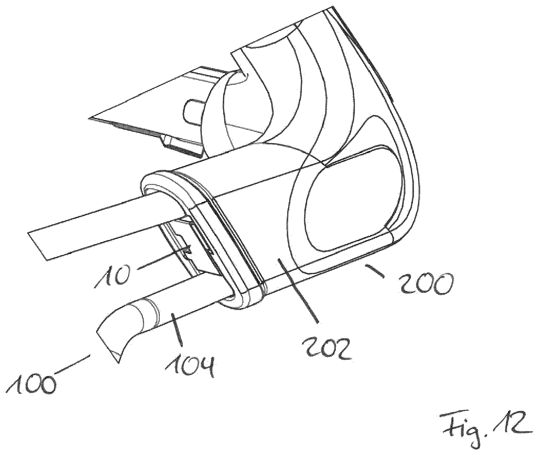

**Fig. 12** zeigt das gesamte erfindungsgemäße Ausführungsbeispiel des Befestigungssystems umfassend das Klemmelement 10, den Transportwagen 100 sowie den Schiebegriff 200. Zur Funktionsweise ist anzumerken, dass sich eine vorteilhafte klemmende Befestigung, die werkzeuglos montiert werden kann, im gezeigten Ausführungsbeispiel durch das Zusammenspiel von Klemmelement 10, Griffbügel 104 und Schiebegriffkappe 202 ergibt. Dabei ist insbesondere vorgesehen, dass die Haltekraft des Halteelementes 16 vom Klemmelement 10 größer gewählt ist als die benötigte Montagekraft der Griffkappe 202. Dies wird beispielsweise hier dadurch erreicht, dass das Klemmelement 10 aufgrund der Ausgestaltung des Haltelements 16 bereits in Position gehalten werden kann. Auf die Haltekraft bzw. Klemmwirkung der Klemmabschnitte 12 kommt es somit nicht an, diese können somit als Vormontagesicherung bzw. zur Klemmung des Klemmelementes 10 im Griffbügel dienen.

Bei dem Schiebegriff 200 kann es sich um einen Schiebegriff, wie beispielsweise aus der DE 198 11 774 A1, handeln. Denkbar ist aber auch, dass der Schiebegriff lediglich die Schiebegriffkappen 202 und eine Schiebestange aufweist. Der Schiebegriff 200 kann mit einem Münzpfandsystem versehen sein, wie dies beispielsweise aus der DE 931 63 77 U1 bekannt ist. Ein weiteres Beispiel wäre beispielsweise die DE 931 34 99 U1.

Ein entsprechender Einkaufswagen 100 wäre beispielsweise aus der DE 103 424 38 A1 bekannt, bei dem ebenfalls die Erfindung entsprechend zum Einsatz kommen kann.

Weiter ist denkbar, dass die Schiebegriffeinheit auch mit einer Griffstange sowie aufragenden Griffelementen versehen ist, wie dies beispielsweise in der DE 10 2016 102 739 A1 bekannt ist.

Außerdem ist es möglich, dass die Schiebegriffeinheit, wie aus der DE 10 2017 104 407 bekannt, mit mehreren Zusatzapplikationen, wie beispielsweise einer Lupe, einem Griffhalter, einem Scannerhalter, einer Displayeinheit, einem integrierten Münzpfandsystem oder dergleichen, versehen ist.

### Bezugszeichen

- 10: Klemmelement
- 12: Klemmabschnitt
- 14: gekrümmte Außenkontur des Klemmabschnitts
- 16: Halteelement
- 18: Federelement
- 20: Verrastungselement
- 21: Führungselement, Führungsfeder
- 22: langer Führungsfederfinger
- 24: kurzer Führungsfederfinger
- 26: gekrümmter Außenabschnitt
- 28: gerader Außenabschnitt kurz
- 30: gerader Außenabschnitt lang
- 32: Schrägkante

- 100: Transportwagen, Einkaufswagen
- 102: Transportwagenkorpus
- 104: Griffbügel

- 200: Schiebegriff
- 202: Schiebegriffkappe
- 204: Schiebegriffkappenausnehmung
- 206: Gegenführungselement, Führungsnut
- 208: Rastausnehmung

## Patentansprüche

1. Befestigungssystem zur Befestigung eines Schiebegriffes (200) eines Transportwagens (100), umfassend wenigstens einen Transportwagenkorpus (102) mit einer Klemmelementeaufnahme und mit dem Schiebegriff (200), weiter umfassend wenigstens ein Klemmelement (10), wobei
das Klemmelement (10) zur Befestigung des Schiebegriffes (200) eines Transportwagens (100) adaptiert ist, insbesondere Einkaufswagens (100), wenigstens aufweisend wenigstens ein Klemmabschnitt (12) zur klemmenden Befestigung mit dem Transportwagenkorpus (102), insbesondere einem Transportwagenwagenkorb, und weiter aufweisend wenigstens ein Verrastungselement (20) zur verrastenden Befestigung des Schiebegriffes (200), wobei das Klemmelement (10) wenigstens ein Führungselement (21) in Form einer Führungsfeder (21) aufweist, das derart ausgebildet ist, dass es im montierten Zustand in ein Gegenführungselement am und/oder im Schiebegriff (200) eingreift,
**dadurch gekennzeichnet, dass** die Führungsfeder (21) einen langen Führungsfederfinger (22) und einen kurzen Führungsfederfinger (24) aufweist, die durch einen entsprechenden Verbindungsabschnitt miteinander verbunden sind, wobei der lange Führungsfederfinger (22) ca. fünf Mal so lang wie der kurze Führungsfederfinger (24) ist.

2. Befestigungssystem nach Anspruch 1, **dadurch gekennzeichnet, dass** der Klemmabschnitt (12) des Klemmelements (10) rampenartig ausgebildet ist.

3. Befestigungssystem nach Anspruch 1 oder Anspruch 2, **dadurch gekennzeichnet, dass** mehrere Klemmabschnitte (12) vorgesehen sind, wobei wenigstens zwei Klemmabschnitte (12) eine voneinander unterschiedliche Ausrichtung aufweisen.

4. Befestigungssystem nach einem der vorhergehenden Ansprüche, **dadurch gekennzeichnet, dass** das Klemmelement (10) eine zumindest teilweise an den Transportwagenkorpus (102) angepasste Außenkontur aufweist.

5. Befestigungssystem nach einem der vorhergehenden Ansprüche, **dadurch gekennzeichnet, dass** das Klemmelement (10) ein Halteelement (16) aufweist, das derart ausgebildet ist, dass es zumindest teilweise im montierten Zustand einen Abschnitt des Transportwagenkorpus (102) klemmend umgreift.

6. Befestigungssystem nach einem der vorhergehenden Ansprüche, **dadurch gekennzeichnet, dass** das Klemmelement (10) wenigstens ein Federelement (18) aufweist, das derart ausgebildet ist, dass es im montierten Zustand gegen einen Abschnitt des Transportwagenkorpus (102) federnd drückt.

7. Befestigungssystem nach einem der vorhergehenden Ansprüche, **dadurch gekennzeichnet, dass** das Verrastungselement (20) eine Rastnocke ist oder umfasst.

8. Transportwagen (100), insbesondere Einkaufswagen, mit wenigstens einem Befestigungssystem nach einem der Ansprüche 1 bis 7.

## Claims

1. Securing system for securing a push handle (200) of a trolley (100) comprising at least one trolley body (102) having a clamping element receiving member and having a push handle (200), further comprising at least one clamping element (10), wherein the clamping element (10) is adapted to secure the push handle (200) of a trolley (100), in particular shopping trolley (100), at least having at least one clamping portion (12) for securing to the trolley body (102) in a clamping manner, in particular a trolley shopping cage, and further having at least one locking element (20) for securing the push handle (200) in a locking manner, wherein the clamping element (10) has at least one guiding element (21) in the form of a guiding spring (21) which is configured in such a manner that, in the assembled state, it engages in a guiding counter-element on and/or in the push handle (200), **characterized in that**
the guiding spring (21) has a long guiding spring finger (22) and a short guiding spring finger (24) which are connected to each other by means of a corresponding connection portion, wherein the long guiding spring finger (22) is approximately 5 times as long as the short guiding spring finger (24).

2. Securing system according to Claim 1, **characterized in that** the clamping portion (12) of the clamping element (10) is configured in a ramp-like manner.

3. Securing system according to Claim 1 or Claim 2, **characterized in that** a plurality of clamping portions (12) are provided, wherein at least two clamping portions (12) have orientations which are different from each other.

4. Securing system according to any one of the preceding claims, **characterized in that** the clamping element (10) has an outer contour which is at least partially adapted to the trolley body (102).

5. Securing system according to any one of the preceding claims, **characterized in that** the clamping element (10) has a retention element (16) which is configured in such a manner that, in the assembled state, it at least partially engages round a portion of the trolley body (102) in a clamping manner.

6. Securing system according to any one of the preceding claims, **characterized in that** the clamping element (10) has at least one resilient element (18) which is configured in such a manner that, in the assembled state, it presses resiliently against a portion of the trolley body (102).

7. Securing system according to any one of the preceding claims, **characterized in that** the locking element (20) is or comprises a locking cam.

8. Trolley (100), in particular shopping trolley, having at least one securing system according to any one of Claims 1 to 7.

## Revendications

1. Système de fixation pour la fixation d'une poignée de poussée (200) d'un chariot de transport (100), comprenant au moins un corps de chariot de transport (102) avec un logement d'élément de serrage et avec la poignée de poussée (200), comprenant en outre au moins un élément de serrage (10), l'élément de serrage (10) étant adapté pour la fixation de la poignée de poussée (200) d'un chariot de transport (100), notamment d'un chariot d'achat (100), présentant au moins une section de serrage (12) pour la fixation par serrage avec le corps de chariot de transport (102), notamment un panier de chariot de transport, et présentant en outre au moins un élément d'encliquetage (20) pour la fixation par encliquetage de la poignée de poussée (200),
l'élément de serrage (10) présentant au moins un élément de guidage (21) sous la forme d'un ressort de guidage (21) qui est configuré de telle sorte qu'à l'état monté, il s'engage dans un contre-élément de guidage sur et/ou dans la poignée de poussée (200),
**caractérisé en ce que** le ressort de guidage (21) présente un doigt de ressort de guidage long (22) et un doigt de ressort de guidage court (24) qui sont reliés l'un à l'autre par une section de liaison correspondante, le doigt de ressort de guidage long (22) étant environ cinq fois plus long que le doigt de ressort de guidage court (24) .

2. Système de fixation selon la revendication 1, **caractérisé en ce que** la section de serrage (12) de l'élément de serrage (10) est configurée en forme de rampe.

3. Système de fixation selon la revendication 1 ou la revendication 2, **caractérisé en ce qu'**il est prévu plusieurs sections de serrage (12), au moins deux sections de serrage (12) présentant une orientation différente l'une de l'autre.

4. Système de fixation selon l'une quelconque des revendications précédentes, **caractérisé en ce que** l'élément de serrage (10) présente un contour extérieur au moins partiellement adapté au corps de chariot de transport (102).

5. Système de fixation selon l'une quelconque des revendications précédentes, **caractérisé en ce que** l'élément de serrage (10) présente un élément de retenue (16) qui est configuré de telle sorte qu'il entoure au moins partiellement, à l'état monté, une section du corps de chariot de transport (102) en la serrant.

6. Système de fixation selon l'une quelconque des revendications précédentes, **caractérisé en ce que** l'élément de serrage (10) présente au moins un élément élastique (18) qui est configuré de telle sorte qu'il appuie élastiquement contre une section du corps de chariot de transport (102) à l'état monté.

7. Système de fixation selon l'une quelconque des revendications précédentes, **caractérisé en ce que** l'élément d'encliquetage (20) est ou comprend une came d'encliquetage.

8. Chariot de transport (100), notamment chariot d'achat, avec au moins un système de fixation selon l'une quelconque des revendications 1 à 7.
